# EUROPEAN PATENT APPLICATION

(11) **EP 3 915 935 A1**
(43) Date of publication of application: **01.12.2021**
(21) Application number: 19919744.3
(22) Date of filing: 27.12.2019
(51) Int. Cl.: C01B 21/068, C08L 63/00, C08L 83/04, C08K 9/06, C08K 7/18, C09K 5/14

(54) **ULTRA-PURE SPHERE-LIKE BETA SILICON NITRIDE POWDER WITH LOW RADIOACTIVITY, PREPARATION METHOD THEREFOR AND USE THEREOF**

(30) Priority: 18.03.2019 CN 201910205390
(71) Applicant: Qingdao Cup New Materials Co., Ltd., Qingdao, Shandong 266200 (CN)
(72) Inventor: CHENG, Huiming, Beijing 100020 (CN); CUI, Wei, Beijing 100020 (CN); SUN, Siyuan, Beijing 100020 (CN); JIA, Zaihui, Beijing 100020 (CN); ZOU, Yifeng, Beijing 100020 (CN)
(74) Representative: Gille Hrabal Partnerschaftsgesellschaft mbB Patentanwälte
(86) International application number: PCT/CN2019/129455
(87) International publication number: WO 2020/186881

(57) **Abstract**

Disclosed is an ultra-pure sphere-like β silicon nitride powder with a low radioactivity, wherein the degree of sphericity is between 0.5-0.99, the uranium impurity content is < 5 ppb, the thorium impurity content is < 5 ppb, and the particle size ranges between 0.5 µm-50 µm. As a filler of an electronic encapsulation material, β silicon nitride powder is suitable for a memory semiconductor encapsulation material with a high thermal conductivity.

## Description

The present application claims the priority of the prior application NO. 201910205390.9 submitted to China National Intellectual Property Administration on March 18, 2019 which is entitled "ULTRA-PURE SPHERE-LIKE β SILICON NITRIDE POWDER WITH LOW RADIOACTIVITY, PREPARATION METHOD THEREFOR AND USE THEREOF". The entire contents of the prior application are incorporated herein by reference.

### TECHNICAL FIELD

The present invention relates to an ultra-pure low radioactive sphere-like β-silicon nitride powder, which can be used as a filler for electronic packaging materials, especially suitable for high thermal conductivity memory semiconductor packaging materials, and belongs to the field of electronic packaging.

### BACKGROUND ART

With the rapid progress of modern microelectronics technology, electronic products and their devices are gradually developing in the direction of miniaturization, high integration and high power. This has led to a continuous increase in power consumption and heat generation while bringing powerful usage features. The data points out that for most electronic devices, they cannot be used at temperatures higher than 80°C. Above this temperature, the reliability will be reduced by half for every 10°C increase in temperature. Chip failure due to system overheating accounts for more than 50% of the total causes of chip failure. It can be seen that the chip cooling problem has become a bottleneck that restricts the further development of electronic products.

### SUMMARY OF THE DISCLOSURE

An aspect of the present invention provides an ultra-pure, low radioactive, sphere-like β-silicon nitride powder, wherein the silicon nitride powder has a sphericity between 0.5 - 0.99, an uranium impurity content <5 ppb, a thorium impurity content <5 ppb, and a particle size range between 0.5 µm - 50 µm.

According to an aspect of the present invention, the silicon nitride powder has a sphericity between 0.85 - 0.99, an uranium impurity content <4.7 ppb, a thorium impurity content <4.1 ppb, and a particle size range between 0.8 µm - 25 µm.

According to an aspect of the present invention, the silicon nitride powder has a sphericity between 0.90 - 0.99, an uranium impurity content <4.5 ppb, a thorium impurity content <3.7 ppb, and a particle size range between 5 µm - 25 µm.

According to an aspect of the present invention, the silicon nitride powder consists of large particles of large size and small particles of small size, wherein a particle size range of the large particles is between 10 µm - 50 µm, a particle size range of the small particles is between 0.5 µm - 10 µm, and a mass ratio of the large particles to the small particles is 2-8:1.

According to an aspect of the present invention, the particle size range of the large particles is between 12 µm - 40 µm, the particle size range of the small particles is between 1 µm - 8 µm, and the mass ratio of the large particles to the small particles is 2-6:1.

According to an aspect of the present invention, the particle size range of the large particles is between 15 µm - 30 µm, the particle size range of the small particles is between 2 µm - 5 µm, and the mass ratio of the large particles to the small particles is 2.5-5:1.

According to an aspect of the present invention, the particle size of the large particles is 25 µm, the particle size of the small particles is 5 µm, and the mass ratio of the large particles to the small particles is 3:1.

According to an aspect of the present invention, the particle size of the large particles is 25 µm, the particle size of the small particles is 0.8 µm, and the mass ratio of the large particles to the small particles is 3:1.

According to an aspect of the present invention, the silicon nitride powder consists of large particles of large size, medium particles of medium size and small particles of small size, wherein a particle size range of the large particles is between 10 µm - 50 µm, a particle size range of the medium particles is between 1.5 µm - 10 µm, a particle size range of the small particles is between 0.5 µm - 1.5 µm, a mass ratio of the large particles, the medium particles and the small particles is 12-18:2-6:1.

According to an aspect of the present invention, the particle size range of the large particles is between 15 µm - 40 µm, the particle size range of the medium particles is between 1.8 µm - 8 µm, the particle size range of the small particles is between 0.5 µm - 1.2 µm, the mass ratio of the large particles, the medium particles and the small particles is 12-16:2-5:1.

According to an aspect of the present invention, the particle size range of the large particles is between 18 µm - 25 µm, the particle size range of the medium particles is between 2 µm - 6 µm, the particle size range of the small particles is between 0.5 µm - 1.0 µm, the mass ratio of the large particles, the medium particles and the small particles is 13-16:2.5-5:1.

According to an aspect of the present invention, the particle size of the large particles is 25 µm, the particle size of the medium particles is 5 µm, the particle size of the small particles is 0.8 µm, the mass ratio of the large particles, the medium particles and the small particles is 15:4:1.

An aspect of the present invention provides a composition comprising the silicon nitride powder as described above and a silica powder, wherein a particle size of the silica powder is between 10 nm - 50 µm, and an uranium/thorium content of the silica powder is < 5 ppb, and a mass ratio of the silicon nitride powder to the silica powder is 1-10: 1.

An aspect of the present invention provides a thermally conductive composite material, the thermally conductive composite material comprising the silicon nitride powder as described above and a resin.

An aspect of the present invention provides a thermally conductive composite material, the thermally conductive composite material comprising the composition as described above and a resin.

According to an aspect of the present invention, the thermally conductive composite material further comprises a curing agent, an accelerator, a release agent, a flame retardant, a colorant, a coupling agent, a stress absorber, and a bonding aid.

According to an aspect of the present invention, the resin comprises an oil-based resin and/or an aqueous resin. Preferably, the oil-based resin comprises an epoxy resin and/or a silicone resin. Preferably, the aqueous resin comprises polytetrafluoroethylene, polyester resin, amino resin and/or acrylic resin.

According to an aspect of the present invention, a thermal conductivity of the thermally conductive composite material is >1.3 W/(m•K).

According to an aspect of the present invention, the thermal conductivity of the thermally conductive composite material is >3.9 W/(m•K).

According to an aspect of the present invention, the thermal conductivity of the thermally conductive composite material is >4.7 W/(m•K).

According to an aspect of the present invention, the thermal conductivity of the thermally conductive composite material is >5.2 W/(m•K).

According to an aspect of the present invention, the thermal conductivity of the thermally conductive composite material is >6.7 W/(m•K).

According to an aspect of the present invention, the thermal conductivity of the thermally conductive composite material is >6.9 W/(m•K).

According to an aspect of the present invention, the thermal conductivity of the thermally conductive composite material is >7 W/(m•K).

An aspect of the present invention provides a method of manufacturing the silicon nitride powder as described above, the method comprising:
(1) mixing and grinding silicon powder with β silicon nitride and grinding medium, drying the obtained slurry and passing it through a sieve;
(2) performing combustion synthesis on the mixture obtained in step (1) under protective atmosphere;
(3) optionally, ball milling the product obtained in step (2);
(4) performing surface modification of the product obtained in step (3) to obtain the silicon nitride powder.

According to an aspect of the present invention, in step (1), an uranium or thorium impurity content of the silica powder is equal to or less than 5 ppb.

According to an aspect of the present invention, in step (1), an uranium or thorium impurity content of the silica powder is equal to or less than 5 ppb, and an uranium or thorium impurity content of the β silicon nitride is equal to or less than 5 ppb.

According to an aspect of the present invention, in step (1), the grinding medium comprising anhydrous ethanol.

According to an aspect of the present invention, in step (1), the grinding is carried out in a nylon ball mill jar.

According to an aspect of the present invention, in step (1), the sieve is a 200 mesh sieve.

According to an aspect of the present invention, in step (2), the protective atmosphere is high purity N₂, a N₂ volume percentage content of the high purity N₂ is >99.999 %.

According to an aspect of the present invention, step (2) comprises: the mixture obtained from step (1) is placed in a crucible, which is subsequently placed in a combustion synthesis reactor, and an ignition tungsten wire is placed at one end of raw material, and the tungsten wire is covered with titanium powder as an igniter, which is ignited at one end under an atmosphere of high purity N₂ (N₂ content >99.999 vol%) at 1MPa-12MPa to initiate a self-propagation reaction, which is completed when the reaction extends from one end of the sample to the other end.

According to an aspect of the present invention, in step (3), the ball milling is carried out in a non-Fe liner, the non-Fe liner comprising a nylon liner or a polyurethane liner.

According to an aspect of the present invention, in step (3), silicon nitride grinding ball is used in the ball milling, an uranium or thorium impurity content of the silicon nitride grinding ball is equal to or less than 5 ppb, the ball milling time is 0-24h.

According to an aspect of the present invention, in step (4), the surface modification comprises: mixing the product obtained from step (3) with a surface modifier; preferably, the surface modifier comprises a silane coupling agent.

According to an aspect of the present invention, step (4) comprises: adding the product obtained from step (3) and a silane coupling agent to ethanol, a proportion of the silane coupling agent is 0.5∼2wt% of the silicon nitride powder, to form a slurry with a solid content of 30∼80wt%, and dry the slurry after mixing it evenly.

An aspect of the present invention provides a method of manufacturing the thermally conductive composite material described above, the method comprising: mixing the aforementioned silicon nitride powder with a resin and optionally adding a curing agent, an accelerator, a release agent, a flame retardant, a colorant, a coupling agent, a stress absorber, and a bonding aid to obtain the thermally conductive composite material.

An aspect of the present invention provides an application of β-silicon nitride powder as a filler for memory semiconductor packaging materials.

An aspect of the present invention provides an application of the silicon nitride powder described above as a filler for memory semiconductor packaging materials.

An aspect of the present invention provides an application of the composition described above as a filler for memory semiconductor packaging materials.

An aspect of the present invention provides an application of the thermally conductive composite material described above as a filler for memory semiconductor packaging materials.

The ultra-pure low radioactive sphere-like β-silicon nitride powder provided by embodiments of the present invention has high sphericity (0.5 - 0.99), low radioactive impurity content (uranium impurity content < 5 ppb, thorium impurity content < 5 ppb). It has high thermal conductivity (up to 7 W/(m•K)) when compounded with an organic matrix and manufactured into a composite material, which is especially suitable for high thermal conductivity memory semiconductor packaging materials.

Memory semiconductor packages have more stringent material requirements than the usual semiconductor packages. Current 3G and 4G communication means utilize electromagnetic wavebands mainly distributed at extra-high frequency (0.3-3G Hz) and the lower end of UHF (3-30 G Hz). With the rapid development of wireless communication technology, the upcoming fifth generation communication technology (i.e., 5G, whose main features are millimeter wavelength, ultra-broadband, ultra-high speed, and ultra-low latency) uses electronic wavebands distributing at the high end of UHF (3-30 G Hz) and very high frequency (30-300 G Hz). As the integration of 5G communication chips is greatly increased, the heat flow density in use is correspondingly increased significantly, many existing packaging materials for electronic communication components are difficult to apply effectively to UHF and very high frequency communication scenarios such as 5G. For example, the most commonly used filler for packaging materials is silica, which has an intrinsic thermal conductivity of only 30 W/(m•K). In the scenario of 5G communication applications with high integration and large heat flow density, the packaging material using silica as filler does not even meet the minimum heat dissipation requirements. Therefore, there is an urgent need to find new packaging material fillers suitable for UHF (3-30 G Hz) and very high frequency (30-300 G Hz) application scenarios.

The soft error rate (SER) problem received a lot of attention in the late 1970s as a memory data topic. As the geometry continues to shrink, memories begin to show signs of random failures. This is because the cell size of the memory product continues to shrink, resulting in increasingly lower voltages and reduced capacitance inside the memory cell. Due to the reduction in capacitance, the critical charge (the minimum charge required for a memory cell to hold data) in memory devices shrinks, thus making them less naturally resistant to SER. Radioactive uranium and thorium elements produce α particles when decaying, which may interfere with the storage unit.

Packaging materials, including molded plastics, top package materials, potting materials, printed circuit boards, bottom filling materials, etc., play a role in placing, fixing, protecting the chip and enhancing the electrical and thermal properties, which is an important way for the chip to dissipate heat. Therefore, the packaging materials should have properties such as high thermal conductivity, low dielectric constant, low dielectric loss, coefficient of thermal expansion that matches the chip (Si), and no degradation by reaction with water. In particular, memory semiconductor packaging materials require extremely low levels of uranium and thorium to prevent soft errors.

Organic resins, including epoxy resins, phenolic resins, polyurethanes, and silicone resins, are commonly used as the substrate for packaging materials. They have good ductility and molding properties, but the thermal conductivity is very low, less than 0.5 W/(m•K). Therefore, it is necessary to fill the organic resin with ceramic particles of high thermal conductivity and good insulation in the highest possible proportion to improve the thermal conductivity, and the filling amount of the above ceramic particles is between 60 and 90 vol %.

As a packaging material, the first thing that comes to mind for practitioners in present field is silicon dioxide, which is by far the most used material, but hardly ever silicon nitride, much less β silicon nitride, comes to mind. Previously, the most common application for silicon nitride was the formulation of α silicon nitride as a ceramic paste, which was sintered and used as a substrate material for electronic devices. For this wide range of applications, α silicon nitride has a distinct advantage over β silicon nitride. The reason is that α silicon nitride is a low-temperature sub-stable phase with high sintering activity, which transforms to the β phase during sintering and undergoes densification at the same time, eventually obtaining a substrate with good dense mechanical properties. The β silicon nitride itself is a high-temperature stable phase with low sintering activity, which is difficult to densify when sintered into ceramics, and thus the mechanical properties of the final substrate obtained can hardly meet the requirements. Therefore, when silicon nitride is mentioned as a material in present field, almost everyone thinks of ceramic paste sintering using α silicon nitride to manufacture substrates: α silicon nitride represents almost the entire value of silicon nitride applications. Therefore, when it comes to finding new packaging material fillers suitable for UHF (3-30 G Hz) and very high frequency (30-300 G Hz) application scenarios, silicon nitride simply does not enter the researchers' consideration. This is because the nature of mainstream α silicon nitride impressed researchers so much that silicon nitride would be rejected outright for the following reasons: silicon nitride is too hard, and after it is used as a filler to prepare the packaging material, it needs to be cut before it can be applied; but the hardness of silicon nitride makes this cutting process extremely painful, and the cost of tool damage alone is unbearably high.

However, the inventors of the present invention broke through the above stereotypical thinking in the process of searching for new packaging materials. The above-mentioned stereotypical thinking is actually caused by this technical fact: currently, α silicon nitride represents almost the entire application value of silicon nitride, so when silicon nitride is mentioned, α silicon nitride always comes to the mind of the researchers. And the hardness of α silicon nitride is quite high. This makes one ignoring an important situation: β silicon nitride is not as hard as researchers think it is. Then the above so-called technical barrier to the use of β silicon nitride for manufacturing packaging materials does not actually exist. The perceived existence of this technical barrier is due to the above-mentioned stereotypical thinking. This stereotypical thinking also caused a state of the art before the present invention was proposed, that is, for a long time, β silicon nitride was not considered by researchers as a filler for chip packaging materials.

After breaking through the above stereotypical thinking, the inventors of the present invention were further surprised to find that β silicon nitride can not only be used as a filler to manufacture packaging materials, but also its performance is very good, especially in the scenario of memory semiconductor packaging materials applications. For example, compared to the most commonly used silicon dioxide, β silicon nitride has a thermal conductivity of 270 W/(m•K) compared to 30 W/(m•K) for silicon dioxide. β-silicon nitride has increased its thermal conductivity by almost an order of magnitude compared to silicon dioxide. In the future, when UHF and very high frequency communication technologies become a reality, β silicon nitride will have an absolute advantage over silicon dioxide in terms of thermal conductivity alone.

The inventors of the present invention recognize that ceramic particle materials used as fillers for packaging materials should have the following characteristics: high intrinsic thermal conductivity, low dielectric constant (<6), low dielectric loss (<0.01), and lowest possible coefficient of thermal expansion.

The relevant physical properties of several ceramic fillers considered by the inventors of the present invention are listed in Table 1. Alumina has also failed to meet the requirements of the new generation of electronic packaging fillers for UHF and VHF communication applications due to its low intrinsic thermal conductivity. Nitrides, such as aluminum nitride, silicon nitride, boron nitride, and silicon carbide, have high intrinsic thermal conductivity. However, among them, silicon carbide is not an insulating material, which has a high dielectric constant and dielectric loss; aluminum nitride and boron nitride also has a high thermal expansion coefficient.

After breaking through the above stereotypical thinking, the inventors of the present invention, in further searching for ceramic materials suitable for UHF and very high frequency communication fields, realized that silicon nitride has the best overall performance, which not only has a low dielectric constant, low dielectric loss, low thermal expansion coefficient and high intrinsic thermal conductivity, but also has good thermal and chemical stability and excellent insulation properties, and is very suitable for electronic packaging filler. In addition, it is particularly suitable for high thermal conductivity UHF and VHF electronic packaging materials due to its lower dielectric constant and dielectric loss at UHF and VHF frequencies. Recognizing that the above properties of silicon nitride are particularly suitable for memory semiconductor packaging materials, the inventors of the present invention have developed silicon nitride powders suitable for memory semiconductor packaging materials.

**Table 1 Physical properties related to several possible ceramic fillers**

| Materials | Thermal conductivity (W/(m•K)) | Dielectric constant (10GHz) | Dielectric loss (10GHz) | Thermal expansion(10⁻⁶/K) |
|---|---|---|---|---|
| SiO₂ | 30 | 3.9 | 0.0001 | 0.5 |
| Al₂O₃ | 30 | 9.4 | 0.0004 | 4.5 |
| A1N | 320 | 8.8 | 0.002 | 4.2 |
| BN | 280 | 5 | 0.0003 | 4.9 |
| Si₃N₄ | 270 | 5.6 | 0.001 | 2.3 |
| SiC | 270 | 40 | 0.7 | 3.7 |

In addition, the thermal conductivity of silicon nitride is mainly achieved through lattice vibrations, and an intact crystal structure can effectively suppress phonon scattering. The introduction of grain boundaries, defects, and impurity atoms can affect the integrity of the crystal structure and increase phonon scattering, thus reducing the actual thermal conductivity of the material. Further, the linear arrangement of the atoms and the interaction between the atoms have a great influence on the heat transfer of the material. For α silicon nitride, the stacking pattern along the c-axis is ABCABC, whereas for β silicon nitride, the stacking pattern is ABAB, and the atoms are more neatly arranged, so the thermal conductivity along the c-axis of β silicon nitride is higher than that of α silicon nitride. Therefore, β silicon nitride is more advantageous than α silicon nitride in terms of thermal conductivity filler.

Finally, to ensure that the packaging material has a high thermal conductivity, the filler is filled in the thermally conductive encapsulation material in the highest possible proportion. This is because when the filler is filled in a low proportion in the organic matrix, the filler particles are dispersed and the thermal conductivity of the encapsulating material still depends essentially on the thermal conductivity of the organic matrix. However, when the filling ratio reaches the percolation threshold, thermally conductive chains are formed between the filler particles and the thermal conductivity of the packaging material can be increased substantially. Of course, the amount of filler in the organic matrix is not the higher the better. At the same time, it is necessary to ensure that the packaging material has good ductility and molding properties. Therefore, the ceramic powder as a filler should also meet certain requirements of shape and particle size, to improve the filling rate of the packaging material at the same time to keep its viscosity as low as possible.

Based on the above understandings, the inventors of the present invention further found in their research that the sphericity, impurity content, and particle size range of β-silicon nitride are a few key parameters in order to further improve the performance of β-silicon nitride for packaging material fillers in memory semiconductor. The details are described below.

### (1) Effect of sphericity

In the case of high filling volume, spherical particles show great advantages. First, the specific surface area of spherical powders is smaller compared with that of flake and column materials, which can effectively reduce the interfacial thermal resistance between filler-organic matrix and improve the thermal conductivity of packaging materials. Second, the thermal conductivity of the packaging materials prepared with spherical powders exhibits an isotropic nature, while the flake and column materials are easily distributed in the matrix in a certain direction, making the packaging materials exhibit anisotropic nature. Third, the specific surface area of spherical-shaped powders is smaller compared with that of flake and column materials, which can effectively reduce the friction between the filler and the organic matrix, thus obtaining packaging materials with lower viscosity.

Sphericity can be used to characterize the morphology of a powder. Sphericity is the degree to which the particle is close to a sphere. D_{L} is the radius of the very large internal sphere of a particle, D_{S} is the radius of the very small internal sphere of the particle. The average value of D_{S} /D_{L} is the sphericity of the powder particles in the product.

### (2) The effect of impurity content

The thermal conductivity of silicon nitride is mainly achieved through lattice vibrations, and an intact crystal structure can effectively suppress phonon scattering. Grain boundaries, defects and the introduction of impurity atoms can affect the integrity of the crystal structure and increase phonon scattering, thus reducing the actual thermal conductivity of the material. In order to reduce α particles produced during the decay of radioactive uranium and thorium elements to interfere with the storage unit and cause soft errors, the content of both radioactive uranium and thorium elements needs to be controlled at very low levels.

### (3) The effect of particle size

Compared with submicron and micron powders, nano-powders have a large specific surface area. Therefore, the high viscosity of the nano-powders and the organic matrix after mixing will produce a large interfacial thermal resistance to reduce the thermal conductivity of the packaging material. Coupled with the high cost of nanomaterial preparation, small yield, high impurity content and poor crystallinity, they are not suitable for use as thermally conductive fillers. For submicron and micron powders, the larger the particle size, the smaller the specific surface area and the lower the interfacial thermal resistance, but the less favorable the formation of thermally conductive chains. Thus, powder particles of large particle size can obtain higher thermal conductivity at high fillings, while powder particles of small particle size exhibit better thermal conductivity at low fillings. In practical applications, we mix powder particles of different particle sizes to form a gradation, in which large particles act as the main body of thermal conductivity and small particles act as a bridge for heat transfer, which can make the packaging material obtain higher thermal conductivity. At the same time, the small particles are filled in the gap of the large particles, which can also obtain a higher filling amount.

Therefore, silicon nitride as a thermally conductive filler should have the following characteristics: high purity (low impurity content) β-silicon nitride, sphere-like morphology, and controllable particle size in the submicron-micron range in order to form a gradation, ultra-low radioactive uranium and thorium content. However, the currently available technology does not allow the preparation of sphere-like shaped β-silicon nitride that meets the above requirements at the same time.

The purpose of the present invention is to provide ultra-high purity, low radiative elements content, sphere-like β-silicon nitride powders. The sphericity is between 0.5 and 0.99 when prepared by improved combustion synthesis method, carbothermal reduction method, pelletizing sintering method, direct nitriding method or high temperature vapor phase method. The sphericity ranges from 0.5 to 0.95 for the combustion synthesis method and the carbothermal reduction method, and from 0.9 to 0.99 for the granulation sintering method, etc. Both uranium and thorium impurity content can reach below 5ppb (10⁻⁹g/g). Taking the combustion synthesis method as an example, the control method of radiative elements content includes, but is not limited to, using high purity silicon powder, diluent, additive raw materials with uranium and thorium impurity content below 5ppb; using high purity silicon nitride grinding balls with uranium and thorium impurity content below 5ppb. The β-silicon nitride powders with the above characteristics are well suited as fillers for electronic packaging materials, especially for memory semiconductor packaging materials.

The present invention relates to a ultra-purity, low radioactivity, sphere-like β-silicon nitride powder with a particle size range between 0.5 and 50 µm, and the particle size can be adjusted and controlled. Among them, the particle size ranges from 0.5 to 20 µm when prepared by combustion synthesis method, carbothermal reduction method, etc., and from 5 to 50 µm when prepared by granulation sintering method, etc. Taking the combustion synthesis method as an example, the control of silicon nitride particle size can be achieved by the type and content of additives, nitrogen pressure, particle size of raw materials, ratio and particle size of diluent, etc. Among them, the principle that the type and content of additives can affect particle size is as follows: changing the type and content of additives can change the combustion synthesis temperature, for example, some additives will absorb heat or exothermic; it can also change the dispersion of raw materials, for example, toner has a separating effect; additives can also react with raw materials, for example, water and silicon will react to form silicon oxide, etc. The higher the nitrogen pressure, the lower the diluent ratio, the larger the diluent particle size, and the higher the temperature of combustion synthesis, the faster the growth of β-silicon nitride and the larger the particle size of the powder. In addition, the larger the particle size of the silicon powder, the larger the particle size of the β-silicon nitride synthesized using it as a template.

### β-silicon nitride powder can be surface modified.

The surface-modified β-silicon nitride powders need be formed in gradations with different particle sizes to achieve higher filling volume and thermal conductivity when compounded with organic resins.

The graded β-silicon nitride powder needs to be mixed with organic resins to prepare thermally conductive composites. In addition, curing agents, accelerators, release agents, flame retardants, coloring agents, coupling agents, stress absorbers, and bonding aids need to be added.

The present invention then has the following outstanding advantages compared with the prior art:
The β-silicon nitride powder has high sphericity, low impurity content and a high thermal conductivity;
The particle size of this β-silicon nitride powder can be adjusted in the submicron-micron range, and the β-silicon nitride powder with micron-level particle size can obtain a higher filling amount; the β-silicon nitride powder with different particle sizes can form a gradation to obtain a higher filling amount and thermal conductivity;
This β-silicon nitride powder has good compatibility with organic resins after surface modification, and can obtain higher filling amount in the resin;
This β-silicon nitride powder can be compounded with organic resin to obtain a composite material with high thermal conductivity, indicating that it is very suitable as a filler for electronic packaging materials, and due to its <5ppb uranium and thorium content, it is particularly suitable for high thermal conductivity memory semiconductor packaging fillers.

It should be noted that the inventors of the present invention have broken through the stereotypical thinking that silicon nitride is not suitable for the manufacture of packaging materials, and this breakthrough in the technical barrier has fully reflected the most significant contribution of the present invention to the prior art. In addition, the inventors of the present invention further recognize that β-SiN is particularly suitable as packaging material for memory semiconductor, and that the sphericity, impurity content, and particle size range of β-SiN are key parameters affecting the use of β-SiN as packaging material for memory semiconductor. Making the above understandings also reflects the contribution of the present invention to the prior art. The means to improve the sphericity of silicon nitride, the means to reduce the content of silicon nitride impurities, and the means to control the particle size range of silicon nitride may not be mysterious and unknown, but until the present invention was proposed, it was difficult for developers in this field to think of employing these means to improve the corresponding parameters. In addition to the previously mentioned technical hurdles, there is another obstacle: this will lead to a significant increase in costs. If the developers did not have a deep understanding of the advantages of β silicon nitride in the field of memory semiconductor packaging, this barrier of rising costs directly led them to abandon these attempts. Therefore, only the inventors of the present invention, having broken through the technical barriers and having the above understanding, could have thought of employing the above means to improve the above parameters of β-silicon nitride to make it particularly suitable for memory semiconductor packaging. The increase in production cost will be completely covered by the commercial value of β silicon nitride due to its excellent performance in memory semiconductor packaging.

### BRIEF DESCRIPTION OF THE DRAWINGS

In order to illustrate the technical solutions of the embodiments of the present invention more clearly, the following drawings of the embodiments will be briefly described. Obviously, the drawings in the following description relate only to some embodiments of the present invention and are not a limitation of the present invention.
- Fig. 1: is XRD of β-silicon nitride powder in Example 1.
- Fig. 2: is SEM of β-silicon nitride powder in Example 1.
- Fig. 3: is particle size distribution of β-silicon nitride powder in Example 1.

### DETAILED DESCRIPTION

The ultra-pure, low radioactive, sphere-like β-silicon nitride powder of the present invention will be described further below in connection with specific embodiments. It should be understood that the following embodiments are intended to illustrate and explain the present invention only exemplarily and should not be construed as limiting the scope of protection of the present invention. Any technology implemented based on the above elements of the present invention is covered by the scope of protection of the present invention.

Unless otherwise specified, ppb herein refers to mass ratio.

### Testing method:

In order to test the thermal conductivity of the product, the material was taken in a ratio of 75% silicon nitride powder and 25% organic resin by mass and mixed thoroughly on a three-roller mill. The mixed slurry was poured into a mold, put into a drying oven, and cured at 100°C for 2h. The cured composites were processed into 30mm*30mm samples with a thickness of 1mm, and the thermal conductivity of the samples was measured by laser pulse method. According to the definition, the sphericity is tested as follows: In the SEM image, 20 particles are selected, and the D_{L} is the radius of the very large internal sphere of the particle, and the D_{S} is the radius of the very small internal sphere of the particle. The average value of D_{S} /D_{L} is the sphericity. A laser particle size meter was used to measure the particle size of the powder and inductively coupled plasma spectroscopy (ICP) was used to measure the uranium and thorium content.

### Example 1 Improved combustion synthesis method for the preparation of β-silicon nitride with high sphericity and low uranium/thorium content

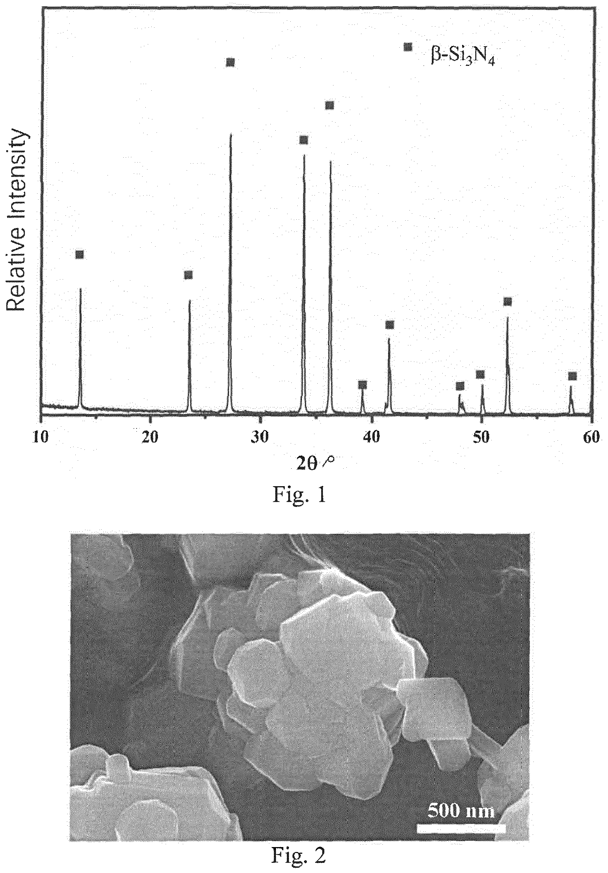

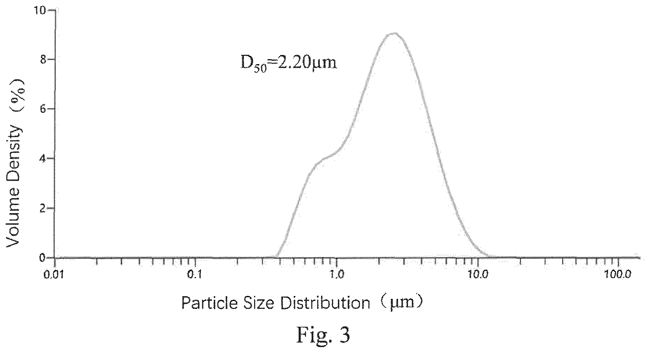

The high purity silicon powder with low uranium/thorium content (uranium < 5ppb, thorium < 5ppb) and β-silicon nitride diluent with low uranium/thorium content (uranium < 5ppb, thorium < 5ppb) was ball-milled in a nylon ball mill jar in a mass ratio of 1:1 with anhydrous ethanol as the medium to mix uniformly. The slurry was dried and passed through a 200 mesh sieve; the mixture was fabricated in a crucible, which was subsequently placed in a combustion synthesis reactor, with an ignition tungsten wire placed at one end of the raw material and a small amount of titanium powder laid on top of the tungsten wire as an igniting agent. The self-propagation reaction was initiated by ignition at one end under a high-purity N₂ (N₂ content >99.999 vol%) atmosphere at 5 MPa. The reaction was completed when the reaction was extended from one end of the sample to the other, and the β-silicon nitride powder was obtained. XRD of the powder is shown in Fig. 1 (as seen in Fig. 1, the silicon nitride obtained in Example 1 is almost entirely β-phase). The resulting product was ball milled for 4 h to obtain β-silicon nitride powder with a particle size of 2.20 µm and a sphericity of 0.91. The powder morphology and particle size are shown in Figs. 2 and 3. Uranium content of 44 ppb and thorium content of 39 ppb were measured by ICP. The final ultra-pure β-silicon nitride powder with a particle size of 2.20 µm, a sphericity of 0.91 and uranium content of 4.4 ppb and thorium content of 3.9 ppb was obtained.

### Example 2 Improved carbon thermal reduction method for the preparation of β-silicon nitride with high sphericity and low uranium and thorium

Low uranium and thorium carbon powder (uranium < 5ppb, thorium < 5ppb) and low uranium and thorium amorphous silicon oxide powder (uranium < 5ppb, thorium < 5ppb) in a mass ratio of 1:2 are used as raw materials, and low uranium and thorium calcium carbonate additive (uranium < 5ppb, thorium < 5ppb) is added, with an addition ratio of 10 mol% of the total raw materials. The above raw materials were mixed with water to prepare a slurry with a solid content of 30 vol %, ball-milled for 24h, dried and grounded. The above raw materials were placed in a pneumatic sintering furnace for carbothermal reduction reaction at a temperature of 1800°C, nitrogen pressure of 3 MPa, and reaction time of 1 h. The product was placed in a muffle furnace and held at 650°C for 5 h to eliminate excess carbon, resulting in a high-purity β-silicon nitride powder with a sphericity of 0.85, a particle size of 5.75 µm, and uranium content of 4 ppb and thorium content of 3.2 ppb.

### Example 3 Improved granulation sintering method for the preparation of β-silicon nitride with high sphericity and low uranium and thorium

Low uranium and thorium content α silicon nitride powder (uranium < 5ppb, thorium < 5ppb) as raw material, add 5 wt% low uranium and thorium yttrium oxide (uranium < 5ppb, thorium < 5ppb) and 3 wt% low uranium and thorium alumina (uranium < 5ppb, thorium < 5ppb) additives, add 1 wt% dispersant and 2 wt% binder PVB in proportion to the total mass of raw materials to form a slurry with a solid content of 50 vol% and mix well for 12h by ball milling. The sphere-like α-silicon nitride granulation powder was prepared by spray granulation of the slurry after ball milling. The parameters of the spray granulation process used were: hot air inlet temperature of 150°C, exhaust air temperature of 70°C, and centrifugal disc speed of the atomizer of 4000 rpm. The granulated powder was placed in a crucible and sintered in a pneumatic sintering furnace at a sintering temperature of 1800°C, a nitrogen pressure of 4 MPa, and a holding time of 2 h. High-purity β-silicon nitride powders with a sphericity of 0.99, a particle size of 30 µm, and uranium content of 4.7 ppb and thorium content of 4.5 ppb was obtained.

### Example 4 Surface modification treatment

The surface modification treatment was completed by adding β-silicon nitride powder with particle size of 2.20 µm, uranium content of 44 ppb and thorium content of 39 ppb, and sphericity of 0.91 and 1 wt% of silane coupling agent to ethanol to form a slurry with a solid content of 50 wt%, and drying the powder after it was uniformly mixed with the silane coupling agent. The surface-modified treated β-silicon nitride powder showed a significant increase in thermal conductivity compared to the untreated β-silicon nitride powder. The thermal conductivity of the untreated β-silicon nitride powder with a particle size of 2.15 µm, uranium content of 44 ppb and thorium content of 39 ppb, and sphericity of 0.91 was only 3.2 W/(m•K) when it was used as a filler. However, after surface modification treatment, the thermal conductivity increased to 3.7 W/(m•K).

### Example 5

The β-silicon nitride powder with a sphericity of 0.9, a medium particle size of 0.8 µm, and uranium content of 4.5 ppb and thorium content of 3.4 ppb was prepared by the carbothermal reduction method. The above β-silicon nitride powder was surface modified and then mixed with epoxy resin, and curing agents, accelerators, release agents, flame retardants, colorants, coupling agents, stress absorbers and bonding aids were further added to make thermally conductive composites. The thermal conductivity of the samples was measured by laser pulse method, and the results are listed in Table 2.

### Example 6

The β-silicon nitride powder with a sphericity of 0.84 and a medium particle size of 5 µm and uranium content of 4.4 ppb and thorium content of 3.6 ppb was prepared by combustion synthesis. The above β-silicon nitride powder was surface-modified and then mixed with epoxy resin, and curing agents, accelerators, release agents, flame retardants, colorants, coupling agents, stress absorbers and bonding aids were further added to make thermally conductive composites. The thermal conductivity of the samples was measured by laser pulse method, and the results are listed in Table 2.

### Example 7

The β-silicon nitride powder with a sphericity of 0.83 and a medium particle size of 10 µm and uranium content of 3.8 ppb and thorium content of 3.8 ppb was prepared by combustion synthesis. The above β-silicon nitride powder was surface-modified and then mixed with epoxy resin, and curing agents, accelerators, release agents, flame retardants, colorants, coupling agents, stress absorbers and bonding aids were further added to make thermally conductive composites. The thermal conductivity of the samples was measured by laser pulse method, and the results are listed in Table 2.

### Example 8

The β-silicon nitride powder with a sphericity of 0.92 and a medium particle size of 25 µm and uranium content of 4.2 ppb and thorium content of 4.1 ppb was prepared by the granulation sintering method. The above β-silicon nitride powder was surface modified and then mixed with epoxy resin, and curing agents, accelerators, release agents, flame retardants, colorants, coupling agents, stress absorbers and bonding aids were further added to make thermally conductive composites. The thermal conductivity of the samples was measured by laser pulse method, and the results are listed in Table 2.

### Example 9

The β-silicon nitride powder with a sphericity of 0.93 and a medium particle size of 50 µm and uranium content of 4.7 ppb and thorium content of 3.7 ppb was prepared by the granulation sintering method. The above β-silicon nitride powder was surface modified and then mixed with epoxy resin, and curing agents, accelerators, release agents, flame retardants, colorants, coupling agents, stress absorbers and bonding aids were further added to make thermally conductive composites. The thermal conductivity of the samples was measured by laser pulse method, and the results are listed in Table 2.

### Example 10

The β-silicon nitride powder with a particle size of 25 µm from Example 8 was mixed with the β-silicon nitride powder with a particle size of 5 µm from Example 6 in a ratio of 75:25. The above β-silicon nitride powder was surface modified and then mixed with epoxy resin, and curing agents, accelerators, release agents, flame retardants, colorants, coupling agents, stress absorbers and bonding aids were further added to make thermally conductive composites. The thermal conductivity of the samples was measured by laser pulse method, and the results are listed in Table 2.

### Example 11

The β-silicon nitride powder with a particle size of 25 µm from Example 8 was mixed with the β-silicon nitride powder with a particle size of 0.8 µm from Example 5 in the ratio of 75:25. The above β-silicon nitride powder was surface modified and then mixed with epoxy resin, and curing agents, accelerators, release agents, flame retardants, colorants, coupling agents, stress absorbers and bonding aids were further added to make thermally conductive composites. The thermal conductivity of the samples was measured by laser pulse method and the results are listed in Table 2.

### Example 12

The 25 µm β-silicon nitride powder of Example 8, 5 µm β-silicon nitride powder of Example 6, and 0.8 µm β-silicon nitride powder of Example 5 were mixed in a ratio of 75:20:5. The above β-silicon nitride powder was surface-modified and then mixed with silicone resin, and curing agents, accelerators, release agents, flame retardants, colorants, coupling agents, stress absorbers and bonding aids were further added to make thermally conductive composite material. The thermal conductivity of the samples was measured by laser pulse method and the results are listed in Table 2.

### Example 13

The 25 µm β-silicon nitride powder of Example 8 and 25 µm silica powder were mixed in a ratio of 80:20. The above β-silicon nitride powder and silica powder were surface-modified and then mixed with epoxy resin, and curing agents, accelerators, release agents, flame retardants, colorants, coupling agents, stress absorbers and bonding aids were further added to make thermally conductive composites. The thermal conductivity of the samples was measured by laser pulse method, and the results are listed in Table 2.

### Example 14

β-silicon nitride powders with a sphericity of 0.93 and a medium particle size of 50 µm and uranium content of 4.7 ppb and thorium content of 3.7 ppb were prepared. the above β-silicon nitride powders were surface-modified and then mixed with silicone resin, and curing agents, accelerators, release agents, flame retardants, colorants, coupling agents, stress absorbers, and bonding aids were further added to make thermally conductive composites. The thermal conductivity of the samples was measured by laser pulse method, and the results are listed in Table 2.

### Comparative example 1

Silica powder with a sphericity of 0.99 and a medium particle size of 50 µm was prepared. The above silica powder was mixed with epoxy resin, and curing agents, accelerators, release agents, flame retardants, colorants, coupling agents, stress absorbers and bonding aids were further added to make thermally conductive composites. The thermal conductivity of the samples was measured by laser pulse method and the results are listed in Table 2.

### Comparative example 2

Silica powder with a sphericity of 0.99 and a medium particle size of 50 µm was prepared. The above silica powder was mixed with silicone resin, and curing agents, accelerators, release agents, flame retardants, colorants, coupling agents, stress absorbers and bonding aids were further added to make thermally conductive composites. The thermal conductivity of the samples was measured by laser pulse method and the results are listed in Table 2.

**Table 2 Properties of ultra-pure low radioactive sphere-like β-silicon nitride powder**

| Number | Particle size and ratio | Uranium/thorium content | Sphericity | Organic matrix | Thermal conductivity |
|---|---|---|---|---|---|
| Example5 | 0.8µm | 4.5/3.4ppb | 0.9 | Epoxy resin | 3.9 W/(m•K) |
| Example6 | 5µm | 4.4/3.6ppb | 0.84 | Epoxy resin | 4.7 W/(m•K) |
| Example7 | 10µm | 3.8/3.8ppb | 0.80 | Epoxy resin | 5.2 W/(m•K) |
| Example8 | 25µm | 4.2/4.1ppb | 0.92 | Epoxy resin | 5.6 W/(m•K) |
| Example9 | 50µm | 4.7/3.7ppb | 0.93 | Epoxy resin | 5.8 W/(m•K) |
| Example 10 | 25, 5µm, 75:25 | 4.2/4.1,4.4/3.6 ppb | 0.92/0.84 | Epoxy resin | 6.7 W/(m•K) |
| Example 11 | 25, 0.8µm, 75:25 | 4.2/4.1,4.5/3.4 ppb | 0.92/0.9 | Epoxy resin | 6.9 W/(m•K) |
| Example 12 | 25, 5, 0.8µm, 75:20:5 | 4.2/4.1,4.4/3.6, 4.5/3.4 ppb | 0.92/0.84,0.9 | Epoxy resin | 7 W/(m•K) |
| Example 13 | 25µm Silicon Nitride, 25µm Silicon Dioxide, 80:20 | Silicon Nitride 4.2/4.1 ppb, Silicon Dioxide/ | Silicon Nitride0.92,Silicon Dioxide0.99 | Epoxy resin | 5.2 W/(m•K) |
| Example 14 | 50µm | 4.7/3.7ppb | 0.93 | Silicone Resin | 1.5 W/(m•K) |
| Comparative example 1 | 50µm Silicon Dioxide | / | 0.99 | Epoxy resin | 1.4 W/(m•K) |
| Comparative example 2 | 50µm Silicon Dioxide | / | 0.99 | Silicone Resin | 1.3 W/(m•K) |

### Discussion of results:

High thermal conductivity can be obtained by mixing silicon nitride powder with organic resin, and its performance is better than the widely used SiO₂ filler at present. As seen from the results of Examples 5-9, the larger the particle size, the higher the thermal conductivity in the range of 0.8 µm-50 µm, when other conditions are the same or not much different. As seen from the results of Examples 5-12, the formation of a gradation of silicon nitride powders of different particle sizes results in higher thermal conductivity than a single particle size silicon nitride powder when other conditions are the same or not very different. In Examples 5-12, the highest thermal conductivity of 7 W/(m•K) was achieved in Example 12, which shows that the thermal conductivity can be further improved by using 3 different sizes of particles, large, medium and small, to form a gradation.

Comparing the results of Example 9 with Comparative example 1, and comparing the results of Example 14 with those of Comparative example 2, it can be understood that, with other conditions being the same or almost the same, the thermal conductivity of the silicon nitride powder provided herein is significantly improved compared to the conventional silicon dioxide powder.

Comparing the results of Example 8 with those of Example 13, it can be understood that replacing silicon nitride powder with a mixture of silicon dioxide and silicon nitride powder, and controlling the amount of silicon dioxide in a small range, there is only a small decrease in thermal conductivity, which also has good potential for application considering the advantages of silicon dioxide in terms of dielectric properties as well as price.

## Claims

1. A sphere-like β-silicon nitride powder, wherein, the silicon nitride powder has a sphericity between 0.5 - 0.99, an uranium impurity content <5 ppb, a thorium impurity content <5 ppb, and a particle size range between 0.5 µm - 50 µm.

2. The silicon nitride powder according to claim 1, wherein, the silicon nitride powder has a sphericity between 0.85 - 0.99, an uranium impurity content <4.7 ppb, a thorium impurity content <4.1 ppb, and a particle size range between 0.8 µm - 25 µm;
preferably, the silicon nitride powder has a sphericity between 0.90 - 0.99, an uranium impurity content <4.5 ppb, a thorium impurity content <3.7 ppb, and a particle size range between 5 µm - 25 µm.

3. The silicon nitride powder according to claim 1 or 2, wherein, the silicon nitride powder consists of large particles of large size and small particles of small size, wherein a particle size range of the large particles is between 10 µm - 50 µm, a particle size range of the small particles is between 0.5 µm - 10 µm, and a mass ratio of the large particles to the small particles is 2-8:1;
preferably, the particle size range of the large particles is between 12 µm - 40 µm, the particle size range of the small particles is between 1 µm - 8 µm, and the mass ratio of the large particles to the small particles is 2-6:1;
preferably, the particle size range of the large particles is between 15 µm - 30 µm, the particle size range of the small particles is between 2 µm - 5 µm, and the mass ratio of the large particles to the small particles is 2.5-5:1;
preferably, the particle size of the large particles is 25 µm, the particle size of the small particles is 5 µm, and the mass ratio of the large particles to the small particles is 3:1;
preferably, the particle size of the large particles is 25 µm, the particle size of the small particles is 0.8 µm, and the mass ratio of the large particles to the small particles is 3:1.

4. The silicon nitride powder according to claim 1 or 2, wherein, the silicon nitride powder consists of large particles of large size, medium particles of medium size and small particles of small size, wherein a particle size range of the large particles is between 10 µm - 50 µm, a particle size range of the medium particles is between 1.5 µm - 10 µm, a particle size range of the small particles is between 0.5 µm - 1.5 µm, a mass ratio of the large particles, the medium particles and the small particles is 12-18:2-6:1;
preferably, the particle size range of the large particles is between 15 µm - 40 µm, the particle size range of the medium particles is between 1.8 µm - 8 µm, the particle size range of the small particles is between 0.5 µm - 1.2 µm, the mass ratio of the large particles, the medium particles and the small particles is 12-16:2-5:1;
preferably, the particle size range of the large particles is between 18 µm - 25 µm, the particle size range of the medium particles is between 2 µm - 6 µm, the particle size range of the small particles is between 0.5 µm - 1.0 µm, the mass ratio of the large particles, the medium particles and the small particles is 13-16:2.5-5: 1;
preferably, the particle size of the large particles is 25 µm, the particle size of the medium particles is 5 µm, the particle size of the small particles is 0.8 µm, the mass ratio of the large particles, the medium particles and the small particles is 15:4:1.

5. A composition comprising the silicon nitride powder of any one of claims 1-4 and a silica powder, wherein a particle size of the silica powder is between 10 nm - 50 µm, and an uranium content of the silica powder is < 5 ppb, a thorium content of the silica powder is < 5 ppb, and a mass ratio of the silicon nitride powder to the silica powder is 1-10:1.

6. A thermally conductive composite material, wherein, the thermally conductive composite material comprising the silicon nitride powder of any one of claims 1-4 and a resin; or the thermally conductive composite material comprising the composition of claim 5 and a resin;
preferably, the thermally conductive composite material further comprises a curing agent, an accelerator, a release agent, a flame retardant, a colorant, a coupling agent, a stress absorber, and a bonding aid;
preferably, the resin comprises an oil-based resin and/or an aqueous resin;
preferably, the oil-based resin comprises an epoxy resin and/or a silicone resin;
preferably, the aqueous resin comprises polytetrafluoroethylene, polyester resin, amino resin and/or acrylic resin;
preferably, a thermal conductivity of the thermally conductive composite material is >1.3 W/(m•K);
preferably, the thermal conductivity of the thermally conductive composite material is >3.9 W/(m•K);
preferably, the thermal conductivity of the thermally conductive composite material is >4.7 W/(m•K);
preferably, the thermal conductivity of the thermally conductive composite material is >5.2 W/(m•K);
preferably, the thermal conductivity of the thermally conductive composite material is >6.7 W/(m•K);
preferably, the thermal conductivity of the thermally conductive composite material is >6.9 W/(m•K);
preferably, the thermal conductivity of the thermally conductive composite material is >7 W/(m•K).

7. A method of manufacturing the silicon nitride powder of any one of claims 1-4, wherein, the method comprising:
(1) mixing and grinding silicon powder with β silicon nitride and grinding medium, drying the obtained slurry and passing it through a sieve;
(2) performing combustion synthesis on the mixture obtained in step (1) under protective atmosphere;
(3) optionally, ball milling the product obtained in step (2);
(4) performing surface modification of the product obtained in step (3) to obtain the silicon nitride powder.

8. The method of claim 7, wherein, in step (1), an uranium or thorium impurity content of the silica powder is equal to or less than 5 ppb;
preferably, in step (1), an uranium or thorium impurity content of the silica powder is equal to or less than 5 ppb, and an uranium or thorium impurity content of the β silicon nitride is equal to or less than 5 ppb;
preferably, in step (1), the grinding medium comprising anhydrous ethanol;
preferably, in step (1), the grinding is carried out in a nylon ball mill jar;
preferably, in step (1), the sieve is a 200 mesh sieve;
preferably, in step (2), the protective atmosphere is high purity N₂, a N₂ volume percentage content of the high purity N₂ is >99.999 %;
preferably, step (2) comprises: the mixture obtained from step (1) is placed in a crucible, which is subsequently placed in a combustion synthesis reactor, and an ignition tungsten wire is placed at one end of raw material, and the tungsten wire is covered with titanium powder as an igniter, which is ignited at one end under an atmosphere of high purity N₂ (N₂ content >99.999 vol%) at 1MPa-12MPa to initiate a self-propagation reaction, which is completed when the reaction extends from one end of the sample to the other end;
preferably, in step (3), the ball milling is carried out in a non-Fe liner, the non-Fe liner comprising a nylon liner or a polyurethane liner;
preferably, in step (3), silicon nitride grinding ball is used in the ball milling, an uranium or thorium impurity content of the silicon nitride grinding ball is equal to or less than 5 ppb, the ball milling time is 0-24h;
preferably, in step (4), the surface modification comprises: mixing the product obtained from step (3) with a surface modifier; preferably, the surface modifier comprises a silane coupling agent;
preferably, step (4) comprises: adding the product obtained from step (3) and a silane coupling agent to ethanol, a proportion of the silane coupling agent is 0.5∼2wt% of the silicon nitride powder, to form a slurry with a solid content of 30∼80wt%, and dry the slurry after mixing it evenly.

9. An application of β-silicon nitride powder as a filler for memory semiconductor packaging materials.

10. An application of the silicon nitride powder of any one of claims 1-4 using as a filler for memory semiconductor packaging materials; or, an application of the composition of claim 5 using as a filler for memory semiconductor packaging materials; or, an application of the thermally conductive composite material of claim 6 using as a filler for memory semiconductor packaging materials.
